# EUROPÄISCHE PATENTSCHRIFT

(11) **EP 1 827 882 B1**
(45) Veröffentlichungstag und Bekanntmachung des Hinweises auf die Patenterteilung: **01.12.2010**
(21) Anmeldenummer: 05821470.1
(22) Anmeldetag: 14.12.2005
(51) Int. Cl.: B60J 3/02

(54) **SPIEGELMODUL, INSBESONDERE FÜR EIN FAHRZEUG, KOMPONENTE, DIE DAS SPIEGELMODUL AUFWEIST, KOMPONENTE, INSBESONDERE SONNENBLENDE UND INSBESONDERE FÜR EIN FAHRZEUG, VERFAHREN ZUR MONTAGE DES SPIEGELMODULS, VERFAHREN ZUR MONTAGE DER KOMPONENTE UND VERWENDUNG DER KOMPONENTE ALS SONNENBLENDE EINES KRAFTFAHRZEUGS**
MIRROR MODULE, ESPECIALLY FOR A VEHICLE, COMPONENT COMPRISING SAID MIRROR MODULE, ESPECIALLY A SUN VISOR AND ESPECIALLY FOR A VEHICLE, METHOD FOR ASSEMBLING THE COMPONENT, AND USE OF THE COMPONENT AS A SUN VISOR IN A MOTOR VEHICLE
MODULE MIROIR, NOTAMMENT POUR UN VEHICULE, COMPOSANT PRESENTANT LE MODULE MIROIR, COMPOSANT, NOTAMMENT PARE-SOLEIL ET EN PARTICULIER POUR UN VEHICULE, PROCEDE POUR MONTER LE MODULE MIROIR, PROCEDE POUR MONTER LE COMPOSANT ET UTILISATION DU COMPOSANT COMME PARE-SOLEIL DANS UNE AUTOMOBILE

(30) Priorität: 15.12.2004 DE 102004060758
(43) Veröffentlichungstag der Anmeldung: 05.09.2007
(73) Patentinhaber: Johnson Controls Interiors GmbH & Co. KG, 47929 Grefrath (DE)
(72) Erfinder: DOLISY, Jacky, F-57220 Bisten en Lorraine (FR)
(74) Vertreter: Schwöbel, Karl T.
(86) Internationale Anmeldenummer: PCT/EP2005/056794
(87) Internationale Veröffentlichungsnummer: WO 2006/064027

(56) Entgegenhaltungen:
- EP-A- 0 844 120
- DE-A1- 19 860 180
- DE-U1- 20 217 313
- US-A- 4 648 011
- US-A- 5 054 839
- PATENT ABSTRACTS OF JAPAN Bd. 2003, Nr. 12, 5. Dezember 2003 (2003-12-05) & JP 2004 017800 A (NISHIKAWA KASEI CO LTD), 22. Januar 2004 (2004-01-22)
- PATENT ABSTRACTS OF JAPAN Bd. 2002, Nr. 05, 3. Mai 2002 (2002-05-03) & JP 2002 012030 A (NEOEX LAB INC), 15. Januar 2002 (2002-01-15)

## Beschreibung

Die vorliegende Erfindung betrifft ein Spiegelmodul, insbesondere für ein Fahrzeug, das einen Modulrahmen, einen Spiegel und eine Spiegelabdeckung umfasst, wobei die Spiegelabdeckung verschiebbar zwischen dem Spiegel und dem Modulrahmen angeordnet ist. Weiterhin begrifft die vorliegende Erfindung eine Komponente, die das Spiegelmodul aufweist.

In Fahrzeugkarosserien schwenkbeweglich gelagerte Sonnenblenden, die einen mittels einem Deckel abdeckbaren Spiegel aufweisen, sind im Stand der Technik beispielsweise der DE 19 860 180 bekannt. Dabei ist der Deckel beispielsweise schwenkbar oder verschieblich, so dass er wahlweise den Spiegel verdecken oder freigeben kann.

Die Gebrauchsmusterschrift DE 202 17 313 U1 offenbart eine solche Sonnenblende, die zwei miteinander verbindbare Halbschalen umfasst, wobei eine der Halbschalen innenseitig zwei Führungen für den Deckel aufweist, in denen dieser verschieblich ist. Der Deckel weist seitlich jeweils zwei federelastische, bügelförmige Vorsprünge auf, um ein Verdrehen zwischen den Führungen zu vermeiden und ein weitestgehend gleichmäßiges Verschieben zu ermöglichen.

Aufgabe der Erfindung ist, ein Spiegelmodul und eine Komponente, insbesondere eine Sonnenblende und insbesondere für ein Fahrzeug, zu schaffen, die einen Spiegel mit einer verschieblichen Spiegelabdeckung aufweist, wobei die Spiegelabdeckung sehr gleichmäßig verschieblich ist, die Komponente sehr einfach und weitestgehend automatisiert fertigbar ist, und wobei die Komponente kostengünstig ist.

Die Aufgage wird gelöst mit einem Spiegelmodul nach Anspruch 1. Der Fachmann versteht, dass das Führungsmittel sowie das Gleitmittel so vorgesehen sein können, dass ein Verdrehen der Spiegelabdeckung beim Verschieben im wesentlichen vermieden wird. Das Führungsmittel ermöglicht daher erfindungsgemäß ein sehr gleichmäßiges Verschieben entlang dem Gleitmittel.

Die Spiegelabdeckung ist erfindungsgemäß zwischen dem Modulrahmen und dem Spiegel angeordnet. In der Fertigung wird sie daher am Modulrahmen angeordnet und der Spiegel dann mit dem Modulrahmen befestigt. Vorzugsweise erfolgt die Befestigung des Spiegels mit ersten Form- und/oder Kraftschlussmitteln, beispielsweise mit Schnappverschlüssen, so dass die Befestigung reversibel ist und daher einerseits einen Austausch der Komponenten ermöglicht. Andererseits ist die Fertigung des Spiegelmoduls aufgrund der Befestigung mittels ersten Form- und/oder Kraftschlussmitteln sehr schnell und einfach durchführbar. Besonders bevorzugt sind der Modulrahmen und die ersten Form- und/oder Kraftschlussmittel einstückig gefertigt, beispielsweise als Spritzgießteil. Ebenso ist die Spiegelabdeckung mit ihrem Führungsmittel bevorzugt einstückig als Spritzgießteil gefertigt. Dadurch ist die Fertigung des Spiegelmoduls sowohl in Bezug auf den Materialaufwand als auch in Bezug auf die Montage sehr kostengünstig. Der modulare Aufbau ermöglicht die Verwendung des Spiegelmoduls in beliebigen Komponenten, insbesondere eines Fahrzeugs.

Der Fachmann versteht, dass eine Anordnung des Gleitmittels auch am Spiegelmodul, beispielsweise am Modulrahmen, möglich ist. Aus Gründen der einfacheren Fertigung und Montage ist es jedoch bevorzugt, das Gleitmittel nicht am Spiegelmodul an zu ordnen.

Erfindungsgemäß weist das Führungsmittel zwei im wesentlichen parallel zueinander angeordnete Schenkel auf, so dass das Führungsmittel besonders bevorzugt im Querschnitt im wesentlichen U oder Y förmig ist. Diese Ausführung des Führungsmittels ist sehr einfach und kostengünstig fertigbar.

Vorzugsweise ist das Gleitmittel eine sich in eine Gleitrichtung erstreckende einspurige oder mehrspurige Schiene. Bei einspuriger Fertigung des Gleitmittels, beispielsweise in Form einer Rippe, umgreift das Führungsmittel das Gleitmittel bevorzugt zumindest teilweise. Bei mehrspuriger Fertigung des Gleitmittels, beispielsweise in Form mehrerer im wesentlichen parallel zueinander angeordneter Rippen, insbesondere bei drei- oder vierspuriger Fertigung des Gleitmittels, umgreift das Gleitmittel das Führungsmittel bevorzugt zumindest teilweise.

Der Fachmann versteht, dass in einer aufgrund des nur geringen damit verbundenen Materialaufwandes bevorzugten Ausführungsform das Gleitmittel zweispurig und das Führungsmittel einspurig vorgesehen ist. Jedoch ist der Materialaufwand noch geringer, wenn das Gleitmittel einspurig gefertigt wird und das Führungsmittel mit zwei Schenkeln versehen ist, so dass diese Ausführungsform besonders bevorzugt ist. Das Führungsmittel ist ganz besonders bevorzugt im wesentlichen in der Mitte eines der sich quer zur Gleitrichtung erstreckenden Ränder der Spiegelabdeckung vorgesehen.

Erfindungsgemäß sind die Schenkel mittels einem Kraftmittel miteinander verspannt, beispielsweise mittels einer Feder. Die mittels dem Kraftmittel auf die Schenkel ausgeübte Kraft bewirkt bevorzugt, dass der Abstand zwischen den Schenkeln elastisch verringert wird. Dadurch liegen die Schenkel zumindest teilweise am Gleitmittel an. Der Fachmann versteht, dass die durch das Kraftmittel auf die Schenkel ausgeübte Kraft so einstellbar ist, dass sie das Spiel zwischen dem Führungsmittel und dem Gleitmittel bzw. geringfügige Ungleichmäßigkeiten in der Fertigung des Führungsmittels und/oder des Gleitmittels zwar ausgleicht, aber dennoch ein leichtes und sehr gleichmäßiges Verschieben der Spiegelabdeckung sichergestellt ist.

Bevorzugt weist die Spiegelabdeckung zumindest ein erstes Ausgleichmittel auf, besonders bevorzugt zwei erste Ausgleichmittel. Das erste Ausgleichmittel ist vorzugsweise federelastisch und bügelförmig und an einem der Gleitrichtung parallelen Rand der Spiegelabdeckung angeordnet. Bei einer Ausführungsform mit zwei Ausgleichmitteln sind diese vorzugsweise im wesentlichen parallel zueinander jeweils an den sich gegenüberliegenden Rändern der Spiegelabdeckung angeordnet, die im wesentlichen parallel der Gleitrichtung verlaufen. Das erste Ausgleichmittel bewirkt einen Ausgleich des Fertigungsspiels zwischen dem Modulrahmen und der Spiegelabdeckung in einer durch die Spiegelabdeckung gebildeten und im wesentlichen parallel dem Spiegel angeordneten Ebene.

Ebenfalls bevorzugt weist die Spiegelabdeckung zumindest ein zweites Ausgleichmittel auf, besonders bevorzugt zwei zweite Ausgleichmittel. Das zweite Ausgleichmittel erstreckt sich in einer Richtung, die quer zu einer durch die Spiegelabdeckung gebildeten und im wesentlichen dem Spiegel parallelen Ebene verläuft, und bewirkt einen Ausgleich des Fertigungsspiels in diese Richtung, bevorzugt zwischen dem Modulrahmen und einer Komponente, in die das Spiegelmodul eingebaut wird. Bevorzugt ist das zweite Ausgleichmittel an einer Anformung, die an einem quer zur Gleitrichtung verlaufenden Rand der Spiegelabdeckung angeordnet ist, angeordnet, und vorzugsweise sind die Anformung und die Ausgleichmittel einstückig mit der Spiegelabdeckung. In einer Ausführungsform, in der die Spiegelabdeckung zwei zweite Ausgleichmittel aufweist, sind die Anformungen bevorzugt nahe den Ecken der Spiegelabdeckung und an demselben Rand der Spiegelabdeckung angeordnet.

Die Ausgleichmittel sind vorzugsweise in einem für den Nutzer nicht sichtbaren Bereich des Spiegelmoduls angeordnet, um den optischen Eindruck nicht zu mindern.

Das erfindungsgemäße Spiegelmodul ist einfach aufgebaut und kann schnell, leicht und sehr kostengünstig gefertigt werden. Die Spiegelabdeckung kann aufgrund des erfindungsgemäßen Führungsmittels sehr gleichmäßig verschoben werden.

Die Aufgabe wird weiterhin gelöst mit einer Komponente, die einen Grundkörper mit einer Ausnehmung aufweist, in die ein erfindungsgemäßes Spiegelmodul eingefügt ist. Komponente und Spiegelmodul können unabhängig voneinander und gegebenenfalls gleichzeitig gefertigt werden, so dass die Fertigung schnell und kostengünstig erfolgen kann.

Bevorzugt weist der Grundkörper ein erstes Grundkörperteil und ein zweites Grundkörperteil auf, die einen Hohlraum bilden, wobei das Spiegelmodul zumindest teilweise im Hohlraum angeordnet ist. Durch die Ausnehmung hindurch ist das Spiegelmodul daher sehr leicht in den Grundkörper einsetzbar.

Bevorzugt erfolgt die Befestigung des Spiegelmoduls mittels zweiten Form- und/oder Kraftschlussmitteln, vorzugsweise mittels Schnappverschlüssen, so dass die Montage schnell und einfach erfolgen kann und reversibel ist. Das Spiegelmodul, seine Bauteile und/oder der Grundkörper sind daher austauschbar. Vorzugsweise sind die zweiten Form- und/oder Kraftschlussmittel am zweiten Grundkörperteil angeordnet und besonders bevorzugt einstückig mit diesem. Die Grundkörperteile sind vorzugsweise Spritzgussteile und daher kostengünstig herstellbar. Das Verbinden der Grundkörperteile erfolgt bevorzugt mittels einem Stoffschluss, besonders bevorzugt mittels Kleben oder Schweißen.

In einer bevorzugten Ausführungsform weist das zweite Grundkörperteil entlang einer Gleitrichtung das Gleitmittel auf, wobei das Gleitmittel bevorzugt ebenfalls einstückig mit dem zweiten Grundkörperteil ist. Dadurch entsteht nur ein sehr geringfügig höherer Materialaufwand für das zweite Grundkörperteil, wobei vorteilhafterweise die Festigkeit des zweiten Grundkörperteils durch das Gleitmittel verbessert ist. Die Fertigungskosten erhöhen sich daher durch das Gleitmittel nicht wesentlich.

Vorzugsweise umfasst die Komponente, einen Grundkörper und einen Spiegel mit einer Spiegelabdeckung wobei die Spiegelabdeckung am Spiegel angeordnet ist, wobei der Grundkörper genau ein Gleitmittel aufweist, entlang dem die Spiegelabdeckung in und entgegen einer Gleitrichtung von einer ersten Position, in der der Spiegel mittels der Spiegelabdeckung im wesentlichen abgedeckt ist, in eine zweite Position, in der der Spiegel zumindest teilweise nicht mittels der Spiegelabdeckung abgedeckt ist, verschiebbar ist. Aufgrund der Verwendung von nur genau einem Gleitmittel, entlang dem die Spiegelabdeckung verschiebbar ist, ist der Materialaufwand zur Herstellung der Komponente gering und die Komponente daher kostengünstig herstellbar. Außerdem kann sich die Spiegelabdeckung daher nicht zwischen zwei Gleitmitteln verkanten.

Bevorzugt weist die Spiegelabdeckung ein Führungsmittel auf, mittels dem sie beim Verschieben entlang dem Gleitmittel geführt ist. Dadurch kann die Spiegelbdeckung sich beim Verschieben nicht verdrehen und nicht verrutschen. Mittels dem Führungsmittel ist sichergestellt, dass das Verschieben leicht und gleichmäßig erfolgt.

Vorzugsweise sind der Spiegel und die Spiegelabdeckung Bauteile eines erfindungsgemäßen Spiegelmoduls, so dass die Komponente modular gefertigt werden kann.

In einer bevorzugten Ausführungsform ist das Gleitmittel einspurig, so dass den Materialaufwand sehr gering ist.

Bevorzugt umgreift das Führungsmittel das Gleitmittel zumindest teilweise. Dadurch wird die Spiegelabdeckung beim Verschieben entlang dem Gleitmittel sicher geführt und verdreht sich nicht.

Im folgenden wird die Erfindung mittels Figuren beschrieben. Die Figuren sind lediglich beispielhaft und schränken den allgemeinen Erfindungsgedanken nicht ein.
- **Figur 1**: zeigt eine Spiegelabdeckung eines erfindungsgemäßen Spiegelmoduls, und zwar in der Darstellung **a** in einer Draufsicht und in der Darstellung **b** in einer Seitenansicht.
- **Figur 2**: zeigt in einer Darstellung **a** eine erfindungsgemäße Komponente, in die ein erfindungsgemäßes Spiegelmodul eingesetzt wird, und in einer Darstellung **b** explosionsartig das Spiegelmodul.
- **Figur 3**: zeigt explosionsartig den Grundkörper einer erfindungsgemäßen Komponente.
- **Figur 4**: zeigt ein erfindungsgemäßes Spiegelmodul aus der einem Nutzer des Spiegelmoduls abgewandten Blickrichtung.

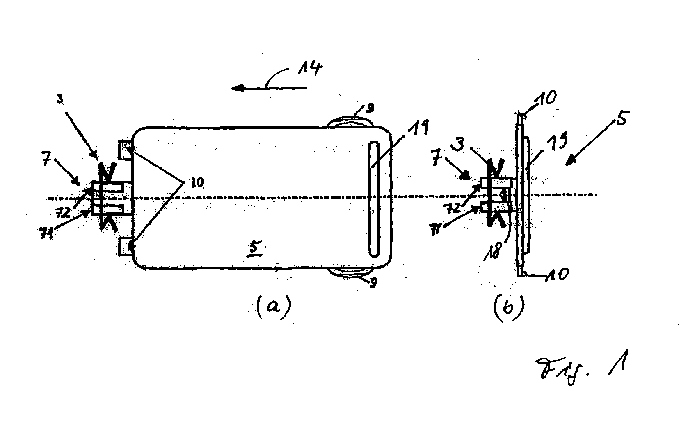

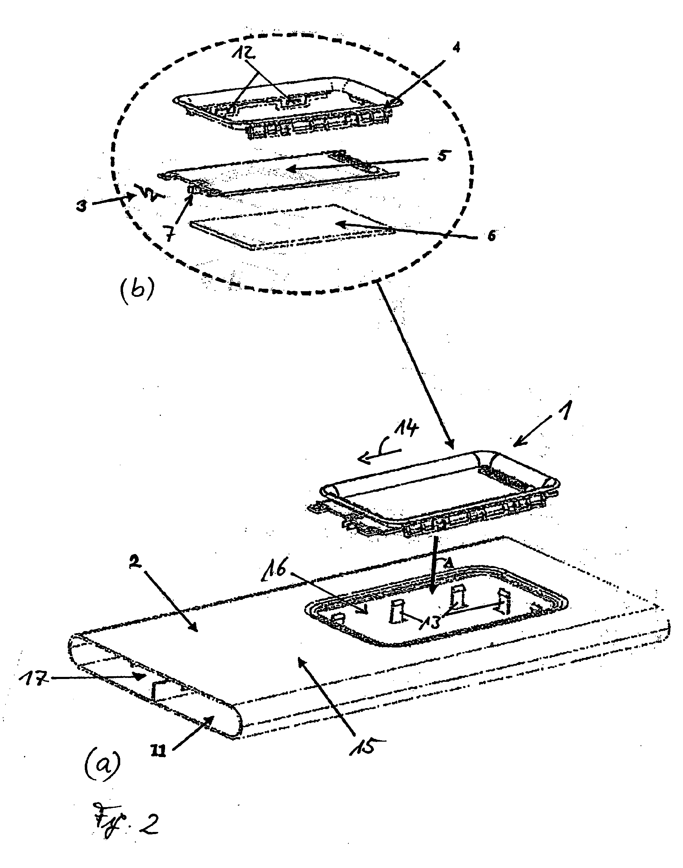

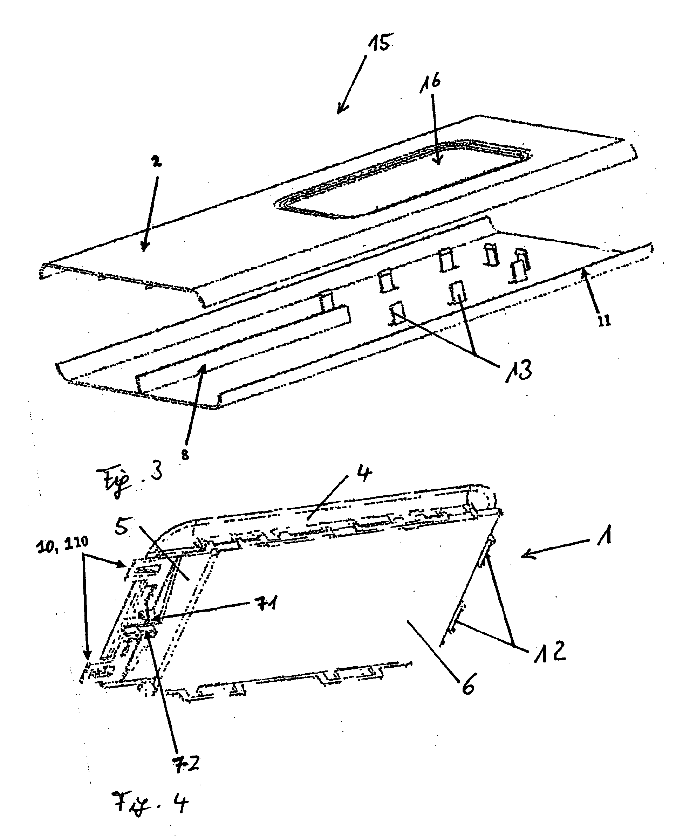

**Figur 1** zeigt eine Spiegelabdeckung 5 eines erfindungsgemäßen Spiegelmoduls 1, das in **Figur 2** und **4** dargestellt ist, und zwar in der Darstellung **a** in einer Draufsicht und in der Darstellung **b** in einer Seitenansicht. Die Spiegelabdeckung 5 weist ein Führungsmittel 7 auf, das im wesentlichen in der Mitte eines der sich quer zu einer Gleitrichtung 14, in der die Spiegelabdeckung 5 im verbauten Zustand im Spiegelmodul 1 verschiebbar ist, erstreckenden Ränder der Spiegelabdeckung 5 vorgesehen ist. Das Führungsmittel 7 weist zwei sich im wesentlichen parallel zueinander und im wesentlichen parallel der Gleitrichtung 14 erstreckende Schenkel 71, 72 auf und ist im Querschnitt im wesentlichen U-förmig. An den im wesentlichen parallel zur Gleitrichtung 14 verlaufenden Rändern der Spiegelabdeckung 5 weist das Führungsmittel 7 jeweils ein erstes Ausgleichmittel 9 auf zum Ausgleich von Fertigungstoleranzen. Weiterhin weist es zwei zweite Ausgleichmittel 10 auf, die sich in einer Richtung, die quer zu einer durch die Spiegelabdeckung 5 gebildeten und im verbauten Zustand im wesentlichen einem Spiegel 6, der in **Figur 2** und **4** dargestellt ist, parallelen Ebene verläuft, und bewirken ebenfalls einen Ausgleich des Fertigungsspiels, jedoch in die Richtung, in die sie sich erstrecken. Die zweiten Ausgleichmittel 10 sind an Anformungen 110 vorgesehen, die nahe den Ecken der Spiegelabdeckung 5 und an demselben, quer zur Gleitrichtung 14 verlaufenden Rand der Spiegelabdeckung 5 angeordnet sind. Die Schenkel 71, 72 des Führungsmittels 7 sind mittels einem Kraftmittel 3 miteinander verspannbar, so dass sich ein zwischen den Schenkeln 71, 72 vorhandener Abstand 18 elastisch verringert. Die Spiegelabdeckung 5 weist einen Anschlag 19 auf, der einerseits das Verschieben in Gleitrichtung 14 begrenzt und dem Nutzer andererseits als "Griff" dient.

**Figur 2** zeigt in einer Darstellung **a** eine erfindungsgemäße Komponente, in die ein erfindungsgemäßes Spiegelmodul 1 eingesetzt wird, und in einer Darstellung **b** explosionsartig das Spiegelmodul 1. Das Spiegelmodul 1 wird in eine Einfügerichtung, die durch einen Pfeil A angedeutet ist, in einen Grundkörper 15 der Komponente eingefügt. Der Grundkörper 15 weist ein erstes Grundkörperteil 2, das eine Ausnehmung 16 aufweist, und ein zweites Grundkörperteil 11 auf, wobei die beiden Grundkörperteile 2, 11 einen Hohlraum 17 bilden. Am zweiten Grundkörperteil 11 sind zweite Form- und/oder Kraftschlussmittel 13 einstückig angeordnet, mittels denen das Spiegelmodul 1 beim Einfügen in Einfügerichtung A und in die Ausnehmung 16 des ersten Grundkörperteils 2 befestigt wird. Im verbauten Zustand erstreckt sich das Spiegelmodul 1 daher zumindest teilweise im Hohlraum 17. Daher steht ausreichend Platz zum Verschieben der Spiegelabdeckung 5 in Gleitrichtung 14 zur Verfügung. Das erste Grundkörperteil 2 und das zweite Grundkörperteil 11 werden vor dem Einfügen des Spiegelmoduls 1 bevorzugt miteinander verschweißt.

In Darstellung **b** ist erkennbar, dass ein erfindungsgemäßes Spiegelmodul 1 bevorzugt nur vier Bauteile umfasst, einen Modulrahmen 4, die Spiegelabdeckung 5, ein Kraftmittel 3 und den Spiegel 6. Zum Befestigen des Spiegels 6 am Modulrahmen 4 weist dieser erste Form- und/oder Kraftschlussmittel 12 auf. Weiterhin ist das an der Spiegelabdeckung 5 angeordnete Führungsmittel 7 sichtbar.

Im verbauten Zustand ist das Spiegelmodul 1 so in die Komponente eingefügt bzw. ist der Spiegel 6 so am Spiegelmodul 1 befestigt, dass durch Verschieben der Spiegelabdeckung 5 die spiegelnde Fläche des Spiegels 6 sichtbar wird.

**Figur 3** zeigt explosionsartig den Grundkörper 15 einer erfindungsgemäßen Komponente. In dieser Darstellung sind die Ausnehmung 16 des ersten Grundkörperteils 2, und - sich im verbauten Zustand im wesentlichen im Randbereich der Ausnehmung 16 befindliche - zweite Form- und/oder Kraftschlussmittel 13 sowie ein Gleitmittel 8 des zweiten Grundkörperteils 11, sichtbar, das sich im wesentlichen in Gleitrichtung 14 erstreckt und entlang dem die Spiegelabdeckung 5 im verbauten Zustand verschieblich ist, siehe **Figur 2****.**

**Figur 4** zeigt ein erfindungsgemäßes Spiegelmodul 1 aus der einem Nutzer des Spiegelmoduls 1 abgewandten Blickrichtung. Die Darstellung zeigt den Spiegel 6 von seiner der spiegelnden Fläche gegenüberliegenden Rückseite, der mittels den ersten Form- und/oder Kraftschlussmitteln 12 am Modulrahmen 4 befestigt ist. Zwischen dem Modulrahmen 4 und dem Spiegel 6 ist die Spiegelabdeckung 5 angeordnet, deren Schenkel 71, 71 des Führungsmittels 7 sichtbar sind. Weiterhin sind die Anformungen 110 mit den zweiten Ausgleichmitteln 10 sichtbar.

### Bezugszeichenliste:

- 1: Spiegelmodul
- 2: Erstes Grundkörperteil
- 3: Kraftmittel
- 4: Modulrahmen
- 5: Spiegelabdeckung
- 6: Spiegel
- 7: Führungsmittel
- 8: Gleitmittel
- 9: Erste Ausgleichmittel
- 10: Zweite Ausgleichmittel
- 110: Anformungen, an denen die zweiten Ausgleichmittel jeweils angeordnet sind.
- 11: Zweites Grundkörperteil
- 12: Erste Form- und/oder Kraftschlussmittel
- 13: Zweite Form- und/oder Kraftschlussmittel
- 14: Gleitrichtung
- 15: Grundkörper
- 16: Ausnehmung
- 17: Hohlraum
- 18: Abstand zwischen den Schenkeln des Führungsmittels
- 19: Anschlag
- A: Einfügerichtung

## Patentansprüche

1. Spiegelmodul (1), insbesondere für ein Fahrzeug, das einen Modulrahmen (4), einen Spiegel (6) und eine Spiegelabdeckung (5) umfasst, wobei die Spiegelabdeckung (5) verschiebbar zwischen dem Spiegel (6) und dem Modulrahmen (4) angeordnet ist und wobei die Spiegelabdeckung (5) ein Führungsmittel (7) aufweist, mittels dem sie entlang einem Gleitmittel (8), das bevorzugt nicht am Spiegelmodul (1) angeordnet ist, geführt ist, wobei das Führungsmittel (7) zwei im wesentlichen parallel zueinander angeordnete Schenkel (71, 72) aufweist, **dadurch gekennzeichnet, dass** die Schenkel (71, 72) mittels einem Kraftmittel (3) miteinander verspannt sind.

2. Spiegelmodul (1) nach einem der vorherigen Ansprüche, **dadurch gekennzeichnet, dass** die Spiegelabdeckung (5) zumindest ein erstes Ausgleichmittel (9) aufweist, bevorzugt zwei erste Ausgleichmittel (9).

3. Spiegelmodul (1) nach einem der vorherigen Ansprüche, **dadurch gekennzeichnet, dass** die Spiegelabdeckung (5) zumindest ein zweites Ausgleichmittel (10) aufweist, bevorzugt zwei zweite Ausgleichmittel (10).

4. Komponente, **dadurch gekennzeichnet, dass** sie einen Grundkörper (15) mit einer Ausnehmung (16) aufweist, in die ein Spiegel modul (1) nach einem der vorherigen Ansprüche eingefügt ist.

5. Komponente nach Anspruch 4, **dadurch gekennzeichnet, dass** der Grundkörper (15) ein erstes Grundkörperteil (2) und ein zweites Grundkörperteil (11) aufweist, die einen Hohlraum (17) bilden, wobei das Spiegelmodul (1) zumindest teilweise im Hohlraum (17) angeordnet ist.

6. Komponente nach einem der Ansprüche 4 oder 5, **dadurch gekennzeichnet, dass** das zweite Grundkörperteil (11) entlang einer Gleitrichtung (14) das Gleitmittel (8) aufweist.

7. Komponente nach einem der Ansprüche 4 bis 6, **dadurch gekennzeichnet, dass** der Grundkörper (15) genau ein Gleitmittel (8) aufweist, entlang dem die Spiegelabdeckung (5) in und entgegen einer Gleitrichtung (14) von einer ersten Position, in der der Spiegel (6) mittels der Spiegelabdeckung (5) im wesentlichen abgedeckt ist, in eine zweite Position, in der der Spiegel (6) zumindest teilweise nicht mittels der Spiegelabdeckung (5) abgedeckt ist, verschiebbar ist.

8. Komponente nach einem der Ansprüche 4 bis 7, **dadurch gekennzeichnet, dass** das Gleitmittel (8) einspurig ist.

9. Komponente nach einem der Ansprüche 4 bis 8, **dadurch gekennzeichnet, dass** das Führungsmittel (7) das Gleitmittel (8) zumindest teilweise umgreift.

## Claims

1. Mirror module (1) especially for a vehicle which comprises a module frame (4), a mirror (6) and a mirror cover (5), the mirror cover (5) being displaceably arranged between the mirror (6) and the module frame (4), and the mirror cover (5) comprising a guiding means (7) by which means it is guided along a sliding means (8) which is preferably not arranged on the mirror module (1), the guiding means (7) comprising two arms (71, 72) arranged substantially parallel to one another, **characterized in that** the arms (71, 72) are clamped to one another by means of a force means (3).

2. Mirror module (1) according to the preceding claim, **characterized in that** the mirror cover (5) comprises at least one first compensating means (9), preferably two first compensating means (9).

3. Mirror module (1) according to one of the preceding claims, **characterized in that** the mirror cover (5) comprises at least one second compensating means (10), preferably two second compensating means (10).

4. Component, **characterized in that** it comprises a base body (15) with a recess (16) into which a mirror module (1) is inserted, according to one of the preceding claims.

5. Component according to Claim 4, **characterized in that** the base body (15) comprises a first base body part (2) and a second base body part (11) which form a cavity (17), the mirror module (1) being arranged at least partially in the cavity (17).

6. Component according to one of Claims 4 or 5, **characterized in that** the second base body part (11) comprises the sliding means (8) in a sliding direction (14).

7. Component according to one of Claims 4 to 6, **characterized in that** the base body (15) comprises just one sliding means (8), along which the mirror cover (5) may be displaced in and counter to a sliding direction (14) from a first position in which the mirror (6) is substantially covered by means of the mirror cover (5), into a second position in which the mirror (6) is at least partially not covered by means of the mirror cover (5).

8. Component according to one of Claims 4 to 7, **characterized in that** the sliding means (8) is a single-track sliding means.

9. Component according to one of Claims 4 to 8, **characterized in that** the guiding means (7) at least partially engages around the sliding means (8).

## Revendications

1. Module miroir (1), notamment pour un véhicule, qui comprend un cadre de module (4), un miroir (6) et un couvercle de miroir (5), le couvercle de miroir (5) étant disposé de façon coulissante entre le miroir (6) et le cadre de module (4) et le couvercle de miroir (5) présentant un moyen de guidage (7), au moyen duquel il est guidé le long d'un moyen de glissement (8), qui n'est de préférence pas disposé sur le module miroir (1), le moyen de guidage (7) présentant deux ailes (71, 72) essentiellement parallèles l'une à l'autre, **caractérisé en ce que** les ailes (71, 72) sont serrées l'une sur l'autre à l'aide d'un moyen de serrage (3).

2. Module miroir (1) selon la revendication précédente, **caractérisé en ce que** le couvercle de miroir (5) présente au moins un premier moyen de compensation (9), de préférence deux premiers moyens de compensation (9).

3. Module miroir (1) selon l'une quelconque des revendications précédentes, **caractérisé en ce que** le couvercle de miroir (5) présente au moins un deuxième moyen de compensation (10), de préférence deux deuxièmes moyens de compensation (10).

4. Composant, **caractérisé en ce qu'**il présente un corps de base (15) avec un évidement (16), dans lequel un module miroir (1) selon l'une quelconque des revendications précédentes est inséré.

5. Composant selon la revendication 4, **caractérisé en ce que** le corps de base (15) comprend une première partie de corps de base (2) et une deuxième partie de corps de base (11), qui forment une cavité (17), dans lequel le module miroir (1) est disposé au moins en partie dans la cavité (17).

6. Composant selon l'une quelconque des revendications 4 ou 5, **caractérisé en ce que** la deuxième partie de corps de base (11) présente le moyen de glissement (8) le long d'une direction de glissement (14).

7. Composant selon l'une quelconque des revendications 4 à 6, **caractérisé en ce que** le corps de base (15) présente précisément un moyen de glissement (8), le long duquel le couvercle de miroir (5) est apte à glisser dans une direction de glissement (14) et dans la direction inverse, d'une première position dans laquelle le miroir (6) est essentiellement recouvert au moyen du couvercle de miroir (5) à une deuxième position dans laquelle le miroir (6) n'est, au moins en partie, pas recouvert par le couvercle de miroir (5).

8. Composant selon l'une quelconque des revendications 4 à 7, **caractérisé en ce que** le moyen de glissement (8) est à voie unique.

9. Composant selon l'une quelconque des revendications 4 à 8, **caractérisé en ce que** le moyen de guidage (7) entoure au moins en partie le moyen de glissement (8).
